# EUROPEAN PATENT APPLICATION

(11) **EP 4 611 113 A1**
(43) Date of publication of application: **03.09.2025**
(21) Application number: 25150427.0
(22) Date of filing: 07.01.2025
(51) Int. Cl.: H01M 10/42, H01M 50/284, H01M 50/287

(54) **THERMAL RUNAWAY PROOF BATTERY CONNECTOR**

(30) Priority: 29.02.2024 US 202418591920
(71) Applicant: Pipistrel D.O.O., 5270 Ajdovscina (SI)
(72) Inventor: VAN STEENIS, Tibor Kjell, Wichita, KS 67215 (US)
(74) Representative: Barker Brettell LLP

(57) **Abstract**

A battery case, connector, and method of forming are provided. The battery case includes, an outer wall (110), a plurality of first wires internal to the battery enclosure, and a battery connector. The battery connector includes an external connector, a circuit board (150) connected to the external connector (140) on a first side through a hole in the outer wall (110) and connected to the plurality of first wires on a second side opposite the first side, where the circuit board (150) is further bonded to an internal side of the outer wall (110) on a portion of the first side, and a plate (160) bonded to the second side of the circuit board (150) opposite the first side, where the plate (160) completely covers a footprint of the hole in the outer wall (110) through which the external connector (140) attaches to the circuit board, but does not cover connection points for the plurality of first wires.

## Description

### TECHNICAL FIELD

The present invention relates generally to a battery connector design that is capable of still providing external connections to a battery cell or battery pack, while maintaining a higher burst pressure of the connector than a battery vent system.

### BACKGROUND

Thermal runaway in a battery system is a self-reinforcing and uncontrollable process where the temperature of the battery rapidly increases, leading to a cascade of events that intensify heat generation. This phenomenon is particularly critical in rechargeable batteries commonly used in various electronic devices and electric vehicles, such as car, boats, and aircraft. The process typically begins with an internal short circuit or other defect that causes an increase in heat production. As the temperature rises, it can accelerate chemical reactions within the battery, leading to further heat generation and a release of flammable electrolyte gases that can increase the internal pressure of a contained battery or sealed battery pack. The escalating temperature can ultimately result in the battery reaching a point of no return, causing catastrophic failure, fire, or even explosions.

Managing and preventing thermal runaway is a significant challenge in battery design and manufacturing, involving the incorporation of safety mechanisms and advanced materials to minimize the risks associated with high temperatures and internal faults. Specifically, batteries used in electric vehicles can be subject to certification requirements requiring methods for controlled venting paths in the event of built-up internal heat and pressure from thermal runaway. However, testing has shown that weakened areas in a battery or battery pack outer casing, such as connectors for internal or external battery management systems (BMSs) and/or main power connectors can leak gasses.

### SUMMARY

In accordance with a preferred embodiment of the present invention, an improved battery or battery pack connector comprises as follows.

In a first possible embodiment, a battery enclosure is provided, including, an outer wall, a plurality of first wires internal to the battery enclosure, and a battery connector. The battery connector includes an external connector, a circuit board connected to the external connector on a first side through a hole in the outer wall and connected to the plurality of first wires on a second side opposite the first side, where the circuit board is further bonded to an internal side of the outer wall on a portion of the first side, and a plate bonded to the second side of the circuit board opposite the first side, where the plate completely covers a footprint of the hole in the outer wall through which the external connector attaches to the circuit board, but does not cover connection points for the plurality of first wires.

In a second possible embodiment, a method of constructing a battery enclosure, includes, forming a hole in an outer wall of the battery enclosure larger than an external connector, assembling a battery connector, and attaching the battery connector on the second side to an inner side of the outer wall with the external connector extending through the hole in the outer wall. Assembling the battery connector includes attaching a plate to a circuit board on a first side in a position to completely cover a footprint of the hole in the outer wall when the battery connector is fitted in the battery enclosure, attaching the external connector to a plurality of second connection points on a second side of the circuit board, and attaching a plurality of first wires to a plurality of first connection points on the first side of the circuit board not covered by the plate.

In a third possible implementation, a battery connector includes an external connector, a circuit board connected to the external connector on a first side and connected to a plurality of first wires on a second side opposite the first side, and a plate bonded to the second side of the circuit board opposite the first side that is larger than a major plane of the external connector, but smaller than a major plane of the circuit board, where the plate completely covers a footprint of the external connector, and where a plurality of first connection points connecting the plurality of first wires are on the circuit board outside an area covered by the plate, and a plurality of second connection points connecting the external connector are inside an area of the major plane of the circuit board covered by the plate.

### BRIEF DESCRIPTION OF THE DRAWINGS

For a more complete understanding of the present invention, and the advantages thereof, reference is now made to the following descriptions taken in conjunction with the accompanying drawings, in which:
Figs. 1A through **1E** are cross sections of construction of a battery connector according to some embodiments;
Fig. 1F is an alternative view of the battery connector shown in Figs. 1A through 1E;
Figs. 2A through 2C are alternative views of a printed circuit board (PCB) according to some embodiments; and
**Figs. 3A through 3B** are alternative views of a battery connector according to an alternative embodiment.

### DETAILED DESCRIPTION OF ILLUSTRATIVE EMBODIMENTS

Illustrative embodiments of the system of the present application are described below. In the interest of clarity, not all features of an actual implementation are described in this specification. It will of course be appreciated that in the development of any such actual embodiment, numerous implementation-specific decisions must be made to achieve the developer's specific goals, such as compliance with system-related and business-related constraints, which will vary from one implementation to another. Moreover, it will be appreciated that such a development effort might be complex and time-consuming but would nevertheless be a routine undertaking for those of ordinary skill in the art having the benefit of this disclosure.

In the specification, reference may be made to the spatial relationships between various components and to the spatial orientation of various aspects of components as the devices are depicted in the attached drawings. However, as will be recognized by those skilled in the art after a complete reading of the present application, the devices, members, apparatuses, etc. described herein may be positioned in any desired orientation. Thus, the use of terms to describe a spatial relationship between various components or to describe the spatial orientation of aspects of such components should be understood to describe a relative relationship between the components or a spatial orientation of aspects of such components, respectively, as the device described herein may be oriented in any desired direction.

Embodiments of the presented principles are directed toward an improved battery connector design used in, for example, electric vehicles such as electric cars, electric boats, and electric aircraft. The system provides high-quality parts that can be customized, resulting stronger sealing capability and the ability to prevent gases from escaping a sealed battery or battery pack through the connector during a thermal runaway event while adding minimal cost and construction requirements to the sealed battery or battery pack.

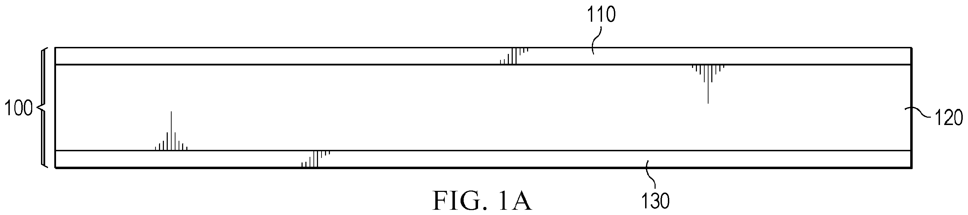

Fig. 1A shows a cross section of battery pack casing 100 according to some implementations. The battery pack casing 100 may be a casing, housing, or other enclosure for one or more batteries, and may provide structural support, electrical insulation, physical isolation, or the like, of enclosed battery or batteries. In some embodiments, the battery pack casing 100 may provide protection against, for example, thermal runaway or other destructive actions by the enclosed batteries. The battery pack casing 100 may, for example, be used to enclose and retain materials used in the construction of the enclosed batteries should the batteries physically fail, with the battery pack casing retaining, or at least controlling release of materials. The battery pack casing 100 may also contain gasses built up during charging or discharging of the enclosed batteries. The battery pack casing 100 may have one or more vents that open in an expected manner and location so that the effects of battery failures or excessive gas buildup may be directed towards a safe path for release. In order to properly vent, other openings, including openings for electrical connectors may be constructed to have a higher release pressure than the vents to prevent uncontrolled release of battery material and/or gasses through the non-vent openings. In other embodiments, the battery pack casing 100 may need to contain the gasses entirely where no vents included.

In the embodiment shown, the battery pack casing 100 consists of an outer wall 110, for example constructed from carbon fiber composite or the like, a core structure 120, and an inner wall 130, that may be formed from carbon fiber composite or the like. In some embodiments, the outer wall 110 and inner wall 130 may be made of plastic, rubber, polymer, metal or metal alloy, or the like. In some embodiments, the core structure 120 may be a honeycomb type structure and is provided to strengthen the battery or battery pack structure, and to provide rigidity and pressure handling capability. In some embodiments, the core structure 120 may be omitted.

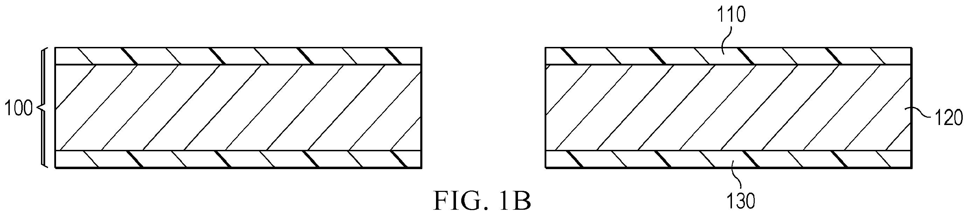

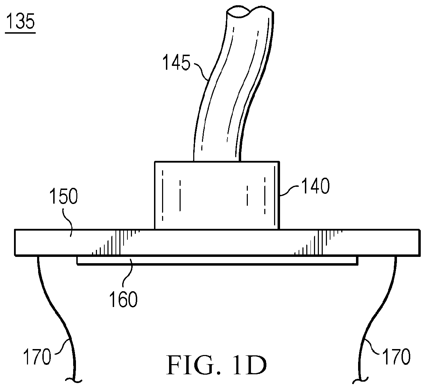

Fig. 1B illustrates the preparation of the battery pack case 100 for receiving the battery connector 135, according to some embodiments. A hole in the battery pack casing 100 is made to accommodate an external connector (see 140 in Fig. 1D). The hole may penetrate completely through the battery pack casing 100, as shown in Fig. 1B, or it may only fully penetrate through the outer wall 110, and a portion of either the core structure 120 and/or the inner wall 130.

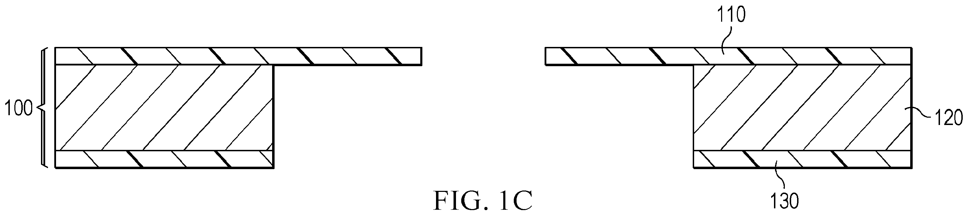

Fig. 1C illustrates the forming of the opening in the core structure 120 and the inner wall 130 of the battery pack casing 100, according to some embodiments. The opening is enlarged to a size sufficient to accommodate a printed circuit board (PCB) (see 150 in Fig. 1D), and that is larger than the hole for the external connector (see 140 in Fig. 1D). The opening may be formed by drilling, cutting, melting, routing, or otherwise removing excess material from the core structure 120 and inner wall 130 of the battery pack casing 100.

Fig. 1D illustrates a battery connector 135 according to some embodiments. In some embodiments, the battery connector 135 consists of the external connector 140, with or without attached wiring 145, a PCB 150, a plate 160, and internal wiring 170. In some embodiments, the external connector 140 may be a removable connector. In some embodiments, the external connector 140 may be hardwired or soldered to the PCB 150. In some embodiments, the plate 160 may be composite carbon fiber, fiberglass, plastic, rubber, hardened rubber, resin, a combination of multiple layers of materials, or the like. The plate 160 may also function to stiffen, seal, and/or reinforce the PCB 150, to limit the escape of built-up gasses during a thermal runaway event. In some embodiments, the plate 160 may be attached to the PCB 150 using epoxy, resin, glue, tape, or the like.

For the sake of illustration, only two internal wires 170 are shown. However, connections for power transfer, battery management or monitoring systems (BMSs) may require additional wires. For example, power transfer wiring may require at least one "hot" wire from the positive current collector of each cell in the battery pack, and a single wire acting as a "common" to the negative current collector of each cell in the battery back (or vice versa). Alternatively, at least two wires may be required for each cell in the battery pack where the discharge and charge of each cell needs to be controlled on an individual basis. The exact wiring configuration of the cells internal to the battery pack casing 100 is extraneous to the disclosure, and the methods and configurations disclosed here can support varying numbers of power transfer wires as required.

Further internal wiring 170 may be required for internal or external BMS functionality. For example, internal wiring 170 may further comprise monitoring lines from and/or to each individual cell, data lines for communication within, from, or to the BMS, or the like. Generally, a BMS will require a wire on each current collector of each cell in a battery pack. In cases where all cells are wired in a single group in series this can be accomplished with a number of wires equal to the number of cells plus one. For example, if a battery pack includes 3 cells, 4 wires may be required by a BMS system to read each individual cell. Two wires would be connected at either end of the battery chain and the remaining two wires between the first and second cell, and the second and third cell. Accordingly any single cell could be measured by selecting the proper wires. External BMS functionality may include remote readouts, charge/discharge monitors, thermocouple connections, or the like.

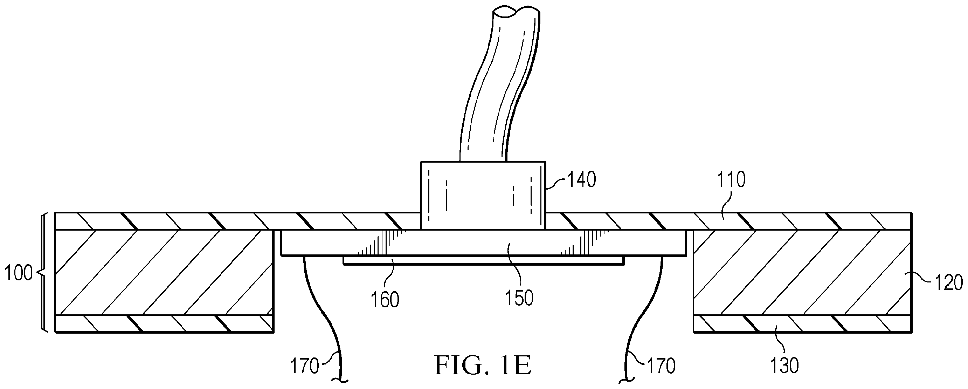

Fig. 1E illustrates the battery connector 135 fitted into the slot in the battery pack casing 100 with the external connector 140 protruding outside the battery pack outer wall 110, and the PCB 150, plate 160, and internal wiring 170 being internal to the battery pack. In some embodiments, a sealant or glue (not shown) may be used to adhere and seal the battery connector 135 to the battery pack casing 100. In some embodiments, the glue may consist of epoxy, resin, glue, tape, sealing solution, caulk, or the like.

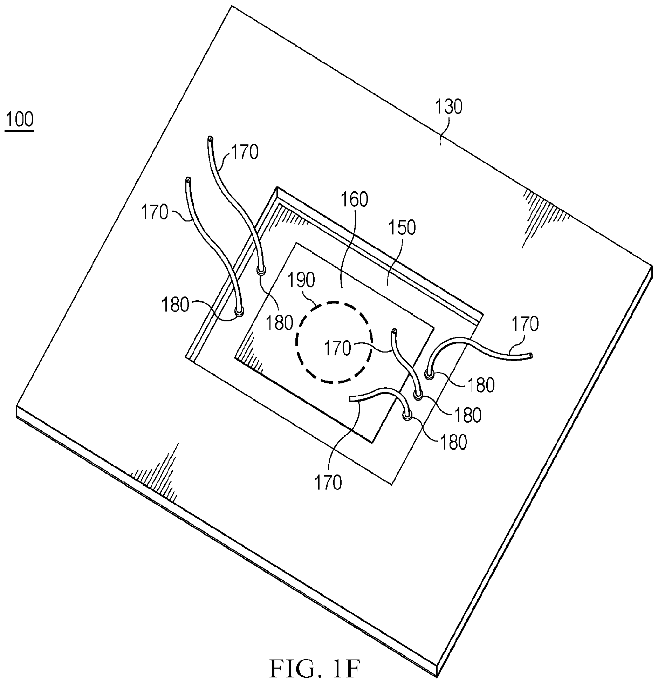

Fig. 1F illustrates view of the battery connector 135 fitted into the battery pack casing 100 from the vantage of the inside of the battery pack looking out, according to some embodiments. As can be seen, the plate 160 is smaller than the PCB 150, but is larger than, and completely covers, an external connector hole footprint 190. Internal connection points 180 are disposed on the PCB 150 and may be configured to connect to the internal wiring (not shown here). In some embodiments, the internal connection points 180 may comprise solder pads, copper pads, pins, sockets, or the like.

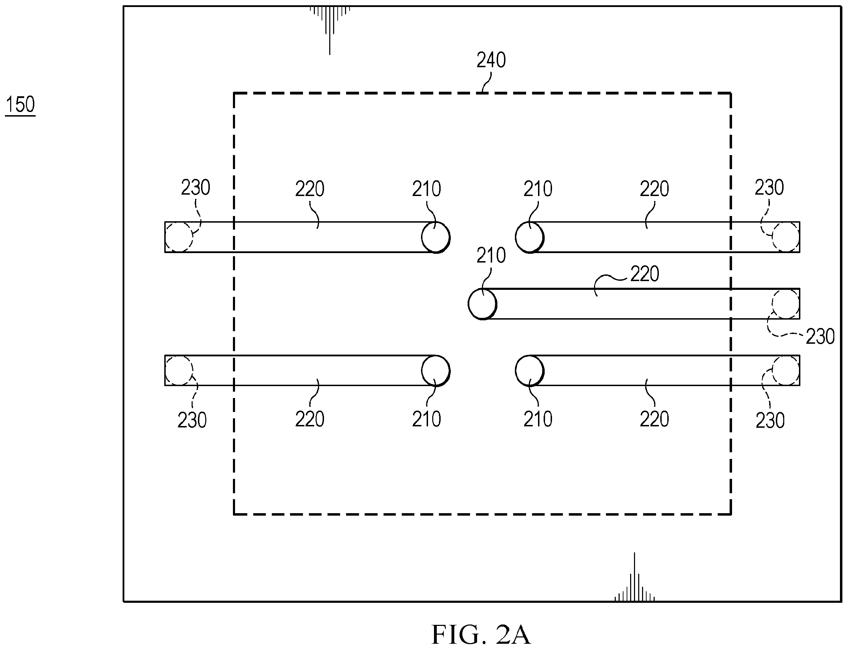

Fig. 2A is a diagram illustrating a view of the external facing side of PCB 150 as would be seen looking from the outside of the battery pack in towards the PCB 150, according to some embodiments. In some embodiments, the system has external connection points 210. In some embodiments, the external connection points 210 may comprise solder pads, copper pads, pins, or the like. Wiring 220 in the PCB 150 connects each of the external connection points 210 inside a plate footprint 240 to a respective internal connection point, which may have a position on the opposite face of the PCB 150 outside the plate footprint 240, shown by internal connection point footprints 230. The wiring 220 may be metal that is deposited into etched groves in one or more layers of the PCB 150, conductive elements deposited in a surface of a layer of a multilayer PCB, wires, or the like, sandwiched between layers of a multilayer PCB 150, or any other suitable means of transferring electricity and/or signaling between the external connection points 210 and the internal connection points 180.

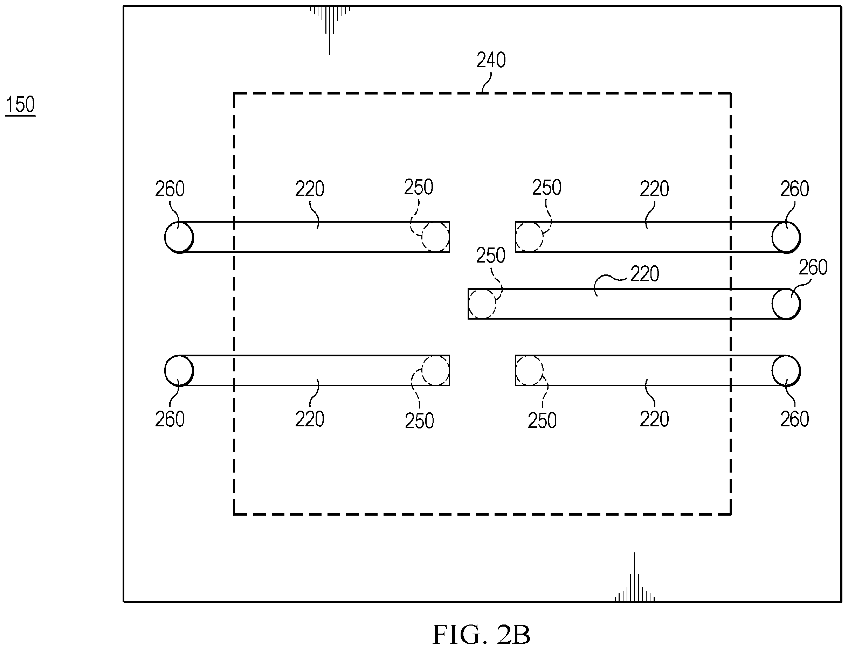

Fig. 2B illustrates the internal side of the PCB 150, according to some embodiments. The wiring 220 connects to the internal connection points 180 outside the plate footprint 240. The external connector point footprints 250 are shown for reference. Various embodiments may include fewer or more internal connection points 180, external connection points 210, traces, or wiring 220 as may be called for based on the number of cells, and functionality desired to be implemented in the battery pack. In some embodiments, the wiring may be internal to the PCB between an area from the external connector hole footprint 190 and the plate footprint 240 to avoid electrical contact between the outer wall 110 and/or plate 160. In some embodiments, avoiding surface wiring on the PCB areas in contact with the plate 160 or the outer wall 110 can limit weak spots on the PCB that may be prone to leaking gasses, especially during heat buildup that may deform or melt metals in or on the PCB. In some embodiments, the wiring 220 may comprise electrical traces, deposited metal lines, bare or electrically insulated wiring, or the like.

In some embodiments, an external connection point 210 may be electrically connected to multiple internal connection points 180, for example, when only a single ground wire is used outside the battery pack casing 100, but each individual cell in the battery has a positive current collector and negative current collector connection internal to the battery pack casing 100.

In some embodiments, the PCB may include additional circuit components (not shown) that facilitate all or a portion of a BMS feature or system. In such cases, there may be additional internal connection points 180 or external connection points 210 to supply power to and/or route data to and from the additional circuit components. In some embodiments, the additional circuit components may include resistors, inductors, capacitors, diodes, light emitting diodes, integrated chips, dies, waveguides, photonic energy sources or receivers, heat sensing elements (e.g., thermocouples), or other electrical, or optical components.

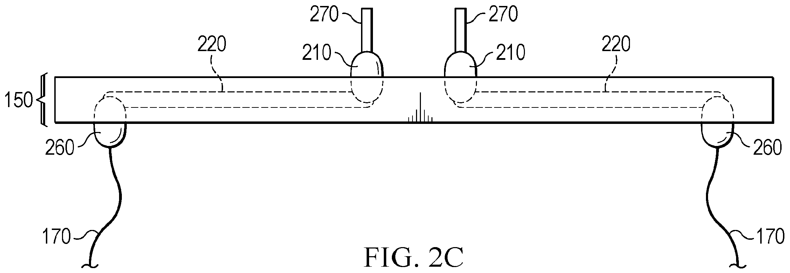

Fig. 2C is a diagram illustrating a side view of a PCB 150, according to some embodiments. The wiring 220 may be internal to the PCB 150. Internal connection points 260 may extend through one or more layers of the PCB to electrically connect to the wiring 220 and provide an electrical connection point on an internal face of the PCB 150. Similarly, external connection points 210 may extend through one or more layers of the PCB 150 to electrically connect to the wiring 220 and provide an electrical connection point on an external face of the PCB 150. In some embodiments, the wiring 220 may comprise wires running in groves cut into internal layers of the PCB 150 during manufacturing, (prior to assembly of the battery connector 135), and sandwiched between one or more outer PCB layers on each side of the PCB 150.

Wires may be soldered directly to either of the external connection points 210 and/or the internal connection points 260. Pins 270 may be utilized to provide removable connection to either of the external connection points 210 and/or the internal connection points 260. In some instances, sockets, plugs, or other methods of providing electrical connection may be used for any or all of the external connection points 210 and/or the internal connection points 260.

In the embodiment shown in Fig. 2C, the wiring 220 is shown completely internal to the PCB 150. However, in some embodiments, some or all of the tracing and/or wiring 220 may be on an inside face or external face of the PCB 150 as well, as well as transitioning through various layers of the PCB 150.

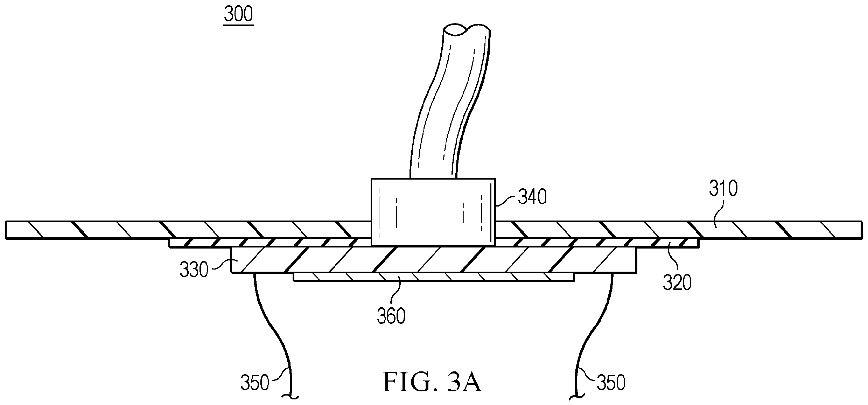

Fig. 3A shows an embodiment installed in battery pack where the battery casing is metallic and/or conductive. In such a case, an insulating layer 320 may further be used to electrically isolate the PCB 330 from the battery case wall 310, but not between the PCB 330 and the external connector 340. In some embodiments, a high-k dielectric material or adhesive such as a polyimide film tape, or the like may be used instead of, or in conjunction with, the insulating layer 320. Similar to the previous embodiment, adhesive may be used between the plate 360 and the PCB 330, as well as between the insulating layer 320 and the PCB 330. In some embodiments the adhesive may comprise epoxy, resin, glue, tape, sealing solution, caulk, or the like

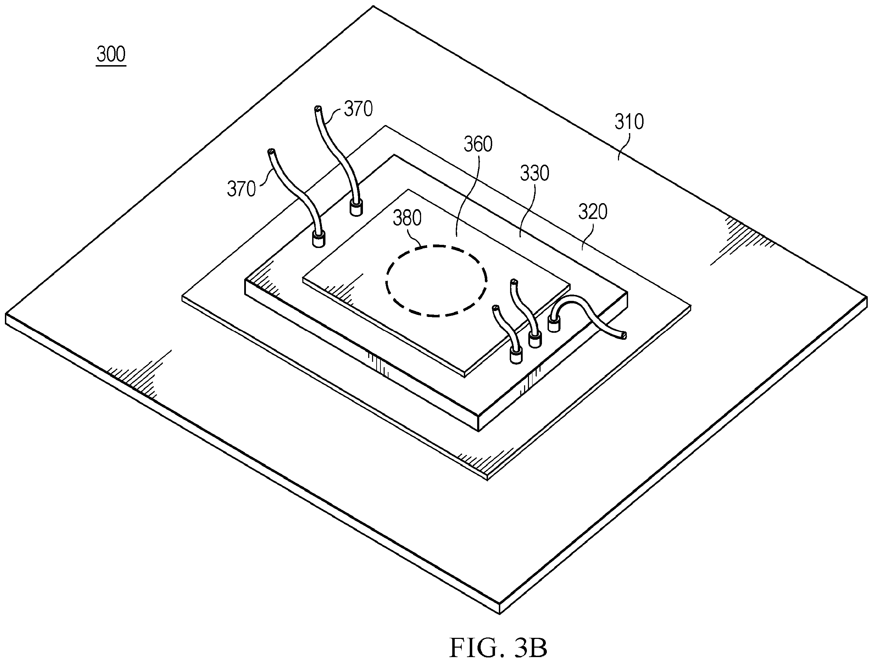

As shown in Fig. 3B, in such an embodiment, the insulating layer 320 extends further than the outer bounds of the PCB 330, which extends further than outer bounds of the plate 360. However, the plate 360 completely covers the external connector hole footprint 380. Internal connection points 370 are located on the PCB 330 outside the area covered by the plate 360 for connecting internal wiring (not shown here). In some embodiments, the internal connection points 370 may comprise solder pads, copper pads, pins, sockets, or the like.

Though utilizing battery connector 135 as described above, a more robust battery connector may be realized that creates a better sealing to prevent gasses escaping via the connector. The additional plate layer helps provide improved pressure retention capabilities and is capable of withstanding high temperatures and delays or prevents the sealing from being burnt away during prolonged exposure to heat and flames, while still maintaining adequate external connection points for the battery with minimal additional cost and overhead.

In a first possible embodiment, a battery enclosure is provided, including, an outer wall, a plurality of first wires internal to the battery enclosure, and a battery connector. The battery connector includes an external connector, a circuit board connected to the external connector on a first side through a hole in the outer wall and connected to the plurality of first wires on a second side opposite the first side, where the circuit board is further bonded to an internal side of the outer wall on a portion of the first side, and a plate bonded to the second side of the circuit board opposite the first side, where the plate completely covers a footprint of the hole in the outer wall through which the external connector attaches to the circuit board, but does not cover connection points for the plurality of first wires.

In some embodiments, the battery enclosure further includes an inner wall and a core structure between the inner wall and the outer wall. In some embodiments, the battery connector extends through a recess formed in the inner wall and where the outer wall that is larger than the hole in the outer wall. In some embodiments, the plurality of first wires includes wires transferring power from a battery. In some embodiments, the plurality of first wires includes wires for connecting to a battery management system (BMS), and where the plurality of first wires are electrically connected to the circuit board at points on the second side of the circuit board outside the plate. In some embodiments, the outer wall is metallic or conductive, and the battery enclosure further includes an electrical insulation layer between the circuit board and the outer wall. In some embodiments, the plate includes at least one of composite carbon fiber, fiberglass, plastic, rubber, hardened rubber, or resin. In some embodiments, the circuit board includes a multi-layer circuit board with a plurality of electrical connections between connection points on the first side of the circuit board and connection points on the second side of the circuit board. In some embodiments, electrical connection inside the circuit board include wires between outer layers of the circuit board.

In a second possible embodiment, a method of constructing a battery enclosure, includes, forming a hole in an outer wall of the battery enclosure larger than an external connector, assembling a battery connector, and attaching the battery connector on the second side to an inner side of the outer wall with the external connector extending through the hole in the outer wall. Assembling the battery connector includes attaching a plate to a circuit board on a first side in a position to completely cover a footprint of the hole in the outer wall when the battery connector is fitted in the battery enclosure, attaching the external connector to a plurality of second connection points on a second side of the circuit board, and attaching a plurality of first wires to a plurality of first connection points on the first side of the circuit board not covered by the plate.

In some embodiments, the method further includes, based on the battery enclosure having a wall including a core structure between the outer wall and an inner wall, forming a recess in the core structure and the inner wall larger than the major plane of the battery connector. In some embodiments, attaching the plate to the circuit board on the first side includes using at least one of epoxy, resin, glue, or tape; and attaching the circuit board to the inner side of the outer wall includes using at least one of epoxy, resin, glue, or tape. In some embodiments, the plate includes at least one of composite carbon fiber, fiberglass, plastic, rubber, hardened rubber, or resin. In some embodiments, the method further includes, before assembling the battery connector: forming groves in middle layers of a multi-layer circuit board structure; inserting wires or forming metallic traces in at least one middle layer of the multi-layer circuit board structure; forming the plurality of second connection points on the second side of the circuit board; and forming the plurality of first connection points on the first side of the circuit board; where the wires or metallic traces electrically connects each of the plurality of second connection points to one or more of the plurality of first connection points. In some embodiments, the plurality of first wires includes wires for transferring power from a battery. In some embodiments, the plurality of first wires includes wires for connecting to a battery management system (BMS).

In a third possible implementation, a battery connector includes an external connector, a circuit board connected to the external connector on a first side and connected to a plurality of first wires on a second side opposite the first side, and a plate bonded to the second side of the circuit board opposite the first side that is larger than a major plane of the external connector, but smaller than a major plane of the circuit board, where the plate completely covers a footprint of the external connector, and where a plurality of first connection points connecting the plurality of first wires are on the circuit board outside an area covered by the plate, and a plurality of second connection points connecting the external connector are inside an area of the major plane of the circuit board covered by the plate.

In some embodiments, the plate includes at least one of composite carbon fiber, fiberglass, plastic, rubber, hardened rubber, or resin. In some embodiments, the circuit board includes a multi-layer circuit board with electrical connections between the second connection points on the first side of the circuit board and the first connection points on the second side of the circuit board. In some embodiments, the plurality of first wires includes wires for connecting to a battery management system (BMS).

While this invention has been described with reference to illustrative embodiments, this description is not intended to be construed in a limiting sense. Various modifications and combinations of the illustrative embodiments, as well as other embodiments of the invention, will be apparent to persons skilled in the art upon reference to the description.

It is therefore intended that the appended claims encompass any such modifications or embodiments.

## Claims

1. A battery enclosure, comprising:
an outer wall;
a plurality of first wires internal to the battery enclosure; and
a battery connector comprising:
an external connector;
a circuit board connected to the external connector on a first side through a hole in the outer wall and connected to the plurality of first wires on a second side opposite the first side, wherein the circuit board is further bonded to an internal side of the outer wall on a portion of the first side; and
a plate bonded to the second side of the circuit board opposite the first side, wherein the plate completely covers a footprint of the hole in the outer wall through which the external connector attaches to the circuit board, but does not cover connection points for the plurality of first wires.

2. The battery enclosure of claim 1, wherein the battery enclosure further comprises an inner wall and a core structure between the inner wall and the outer wall.

3. The battery enclosure of claim 1, wherein the plurality of first wires comprises wires for connecting to a battery management system (BMS), and wherein the plurality of first wires are electrically connected to the circuit board at points on the second side of the circuit board outside the plate.

4. The battery enclosure of claim 1, wherein the outer wall is metallic or conductive, and the battery enclosure further includes an electrical insulation layer between the circuit board and the outer wall.

5. The battery enclosure of claim 1, wherein electrical connection inside the circuit board comprise wires between outer layers of the circuit board.

6. A method of constructing a battery enclosure, comprising:
forming a hole in an outer wall of the battery enclosure larger than an external connector;
assembling a battery connector comprising:
attaching a plate to a circuit board on a first side in a position to completely cover a footprint of the hole in the outer wall when the battery connector is fitted in the battery enclosure;
attaching the external connector to a plurality of second connection points on a second side of the circuit board; and
attaching a plurality of first wires to a plurality of first connection points on the first side of the circuit board not covered by the plate; and
attaching the battery connector on the second side to an inner side of the outer wall with the external connector extending through the hole in the outer wall.

7. The method of claim 6, further comprising, based on the battery enclosure having a wall including a core structure between the outer wall and an inner wall:
forming a recess in the core structure and the inner wall larger than the major plane of the battery connector; or
the battery enclosure of claim 2, wherein the battery connector extends through a recess formed in the inner wall and wherein the outer wall that is larger than the hole in the outer wall.

8. The method of claim 6, wherein attaching the plate to the circuit board on the first side comprises using at least one of epoxy, resin, glue, or tape; and
wherein attaching the circuit board to the inner side of the outer wall comprises using at least one of epoxy, resin, glue, or tape.

9. The method of claim 6 or the battery enclosure of claim 1, wherein the plate comprises at least one of composite carbon fiber, fiberglass, plastic, rubber, hardened rubber, or resin.

10. The method of claim 6, wherein the method further comprises, before assembling the battery connector:
forming groves in middle layers of a multi-layer circuit board structure;
inserting wires or forming metallic traces in at least one middle layer of the multi-layer circuit board structure;
forming the plurality of second connection points on the second side of the circuit board; and
forming the plurality of first connection points on the first side of the circuit board;
wherein the wires or metallic traces electrically connects each of the plurality of second connection points to one or more of the plurality of first connection points.

11. The method of claim 6 or the battery enclosure of claim 1, wherein the plurality of first wires comprises wires for transferring power from a battery.

12. An battery connector, comprising:
an external connector;
a circuit board connected to the external connector on a first side and connected to a plurality of first wires on a second side opposite the first side; and
a plate bonded to the second side of the circuit board opposite the first side that is larger than a major plane of the external connector, but smaller than a major plane of the circuit board;
wherein the plate completely covers a footprint of the external connector, and wherein a plurality of first connection points connecting the plurality of first wires are on the circuit board outside an area covered by the plate, and a plurality of second connection points connecting the external connector are inside an area of the major plane of the circuit board covered by the plate.

13. The battery connector of claim 12, wherein the plate comprises at least one of composite carbon fiber, fiberglass, plastic, rubber, hardened rubber, or resin.

14. The battery connector of claim 12 or the battery enclosure of claim 1, wherein the circuit board comprises a multi-layer circuit board with electrical connections between the second connection points on the first side of the circuit board and the first connection points on the second side of the circuit board.

15. The battery connector of claim 12 or the method of claim 6, wherein the plurality of first wires comprises wires for connecting to a battery management system (BMS).
